# EUROPÄISCHE PATENTANMELDUNG

(11) **EP 2 492 566 A2**
(43) Veröffentlichungstag der Anmeldung: **29.08.2012**
(21) Anmeldenummer: 11007580.1
(22) Anmeldetag: 17.09.2011
(51) Int. Cl.: F16L 5/06, H02G 3/06, H02G 15/04

(54) **Verschraubung zur abgedichteten Durchführung von Leitungen**

(30) Priorität: 26.02.2011 DE 102011012566
(71) Anmelder: Pflitsch GmbH & Co. KG., 42499 Hückeswagen (DE)
(72) Erfinder: Schulten, Dennis, 42499 Hückeswagen (DE); Leßenich, Matthias, 42929 Wermelskirchen (DE)
(74) Vertreter: Köchling, Conrad-Joachim

(57) **Zusammenfassung**

Um eine Verschraubung zur abgedichteten Durchführung von Leitungen, Rohren oder Stäben, bestehend aus einem rohrförmigen Teil mit Außengewinde, das mit Abstand von seinen Enden einen Ansatz (4) für ein Werkzeug aufweist, wobei das erste Ende mit einem Klemm- und/oder Dichteinsatz (3) kombiniert ist, der mittels einer auf das erste Ende aufgeschraubten gelochten Druckschraube (1) betätigbar ist, und das zweite Ende durch eine Lochung einer Bauteilwandung steckbar und in Solllage durch eine Kontermutter oder ein anderes Befestigungsmittel fixierbar ist, zu schaffen, wird vorgeschlagen, dass das rohrförmige Teil aus einem Gewinderohrstück (6) besteht.

## Beschreibung

Die Erfindung betrifft eine Verschraubung zur abgedichteten Durchführung von Leitungen, Rohren oder Stäben, bestehend aus einem rohrförmigen Teil mit Außengewinde, das mit Abstand von seinen Enden einen Ansatz für ein Werkzeug aufweist, wobei das erste Ende mit einem Klemm- und/oder Dichteinsatz kombiniert ist, der mittels einer auf das erste Ende aufgeschraubten gelochten Druckschraube betätigbar ist, und das zweite Ende durch eine Lochung einer Bauteilwandung steckbar und in Solllage durch eine Kontermutter oder ein anderes Befestigungsmittel fixierbar ist.

Verschraubungen dieser Art sind im Stand der Technik vielfach bekannt. Hierbei ist regelmäßig das rohrförmige Teil mit Außengewinde samt dem Ansatz für ein Werkzeug, der häufig als Polygon ausgebildet ist, einstückig ausgebildet. Sofern solche Teile aus Metall hergestellt werden, ist es erforderlich, das rohrförmige Teil samt Werkzeugansatz durch spanabhebende Bearbeitung zu erzeugen, was ein relativ hoher Aufwand ist und daher zu einem relativ teuren Produkt führt. Auch ist es möglich, solche Teile aus Kunststoff zu fertigen, wobei auch hier der Aufwand relativ groß ist, da für jede Ausführungsform und jede Abmessung separate Werkzeuge zur Verfügung gestellt werden müssen, mit denen das entsprechende rohrförmige Teil samt Werkzeugansatz hergestellt werden kann.

Ein Beispiel solcher Ausführungsformen ist in der EP 1 675 244 A 2 beschrieben. Des Weiteren ist eine entsprechende Ausführungsform in der DE 103 12 749 A 1 beschrieben. Eine weitere Ausführungsform ist in der GB 2 138 638 A beschrieben. Des Weiteren wird zum Stand der Technik auf die DE 297 22 267 U 1 verwiesen. Ein weiterer Stand der Technik ist aus der DE 20 2010 013 832 U 1 bekannt. Hierbei ist die entsprechende Verschraubung aus Kunststoff gefertigt, wobei ein Hülsenbauteil mit einem Gewindebereich und einem Bereich mit Quetschlamellen einstückig angeformter Bestandteil einer Anschlussdose, beispielsweise einer Anschlussdose für Solarmodule ist.

Ausgehend von diesem Stand der Technik liegt der Erfindung die Aufgabe zugrunde, eine Verschraubung gattungsgemäßer Art zu schaffen, die mit einfachen Mitteln und in einfacher Weise gefertigt werden kann, wobei zudem insbesondere bei der Herstellung solcher Verschraubungen aus Metall eine Materialeinsparung erreicht werden soll.

Zur Lösung dieser Aufgabe schlägt die Erfindung vor, dass das rohrförmige Teil aus einem Gewinderohrstück besteht.

Gemäß der Erfindung ist das rohrförmige Teil nicht mehr einstückiger Bestandteil mit dem Werkzeugansatz, sondern es ist selbständiges Element.

Ein solches rohrförmiges Teil, welches aus einem Gewinderohrstück besteht, kann in einfacher Weise gefertigt werden, weil ein solches Rohrstück entweder aus einem glatten Rohrstück gefertigt werden kann, welches nachfolgend mit Gewinde versehen wird, oder aber das rohrförmige Teil kann als Abschnitt eines schon fertigen Gewinderohres vereinzelt und zur Verfügung gestellt werden. Das Gewinde des Gewinderohrstückes kann beispielsweise ein metrisches Gewinde sein.

Der Fertigungsaufwand ist hierdurch erheblich reduziert, weil auf handelsübliche Gewinderohre oder Rohre zurückgegriffen werden kann, die preiswert zur Verfügung gestellt werden können und in unterschiedlicher Materialqualität erhältlich sind. Zur Fertigung der Verschraubung kann von solch einem Gewinderohr ein entsprechend langes Gewinderohrstück abgeteilt werden, welches dann zur Komplettierung der Verschraubung eingesetzt wird. Aufwendige Zerspanungsvorgänge sind hierbei nicht erforderlich und ebenso wird eine Materialersparnis erzielt, da kein überflüssiges Material durch Zerspanung entfernt werden muss. Auch bei der Fertigung aus Kunststoff kann auf entsprechende vorgefertigte Gewinderohre zurückgegriffen werden, die in entsprechender Länge abgeteilt werden, um dann ein Element der Verschraubung zu bilden.

Besonders bevorzugt ist dabei vorgesehen, dass der Ansatz für ein Werkzeug durch einen Gewindering oder eine Mutter gebildet ist, der oder die auf das Gewinderohrstück aufgeschraubt ist.

Gemäß dieser Ausbildung ist der Ansatz für das Werkzeug durch einen Gewindering oder eine Mutter gebildet. Eine entsprechende Mutter kann, wenn sie handelsüblich ist, in einfacher Weise beigestellt werden oder aber es kann ein entsprechender Gewindering oder dergleichen aus beispielsweise stranggepresstem Material abgelängt werden und entsprechend mit dem Gewinderohrstück kombiniert werden, indem es auf das Gewinderohrstück aufgeschraubt wird.

Bevorzugt ist dabei vorgesehen, dass der Ansatz für ein Werkzeug auf das Gewinderohrstück aufgebracht und in Solllage, vorzugsweise unlösbar, darauf fixiert ist.

Durch diese Ausbildung ist sichergestellt, dass der Werkzeugansatz, wenn er einmal lagerichtig auf dem Gewinderohrstück angebracht und positioniert ist, in seiner Lage nicht mehr veränderbar ist, was für die Anwendung vorteilhaft ist.

Bevorzugt kann dabei vorgesehen sein, dass der Ansatz für ein Werkzeug auf dem Gewinderohrstück unter Selbsthemmung gehalten ist, oder geklebt, angepunktet oder verquetscht ist.

Der Werkzeugansatz, der auch im herkömmlichen Stand der Technik solcher Verschraubungen üblich ist, wird regelmäßig mit einer Dichtung kombiniert, die auf dem Gewinderohrstück angeordnet ist und sich in Montagesolllage im Bereich der Lochung an der Bauteilwandung abstützt, die von dem Gewinderohrstück durchgriffen ist.

Um hier eine verliersichere Anordnung zu schaffen und zudem gleichzeitig eine Fixierung des Werkzeugansatzes auf dem Gewinderohrstück zu erreichen, ist vorgesehen, dass der Ansatz für ein Werkzeug auf das Gewinderohrstück aufgeschraubt ist und ein Dichtring auf seiner dem zweiten Ende des Gewinderohrstücks zugewandten Seite angeordnet ist, der mit einer Dichtlippe zwischen dem Gewinde des Gewinderohrstücks und dem Gewinde des Ansatzes eingeklemmt gehalten ist.

Durch diese Anordnung wird erreicht, dass in der Montagesolllage der Dichtring mit der Dichtlippe zwischen dem Gewinde des Gewinderohrstückes und dem Gewinde des Ansatzes eingeklemmt gehalten ist, wodurch einerseits der Dichtring gehalten ist und andererseits durch die Verquetschung der Dichtlippe eine lagesichere Anordnung des Ansatzes für das Werkzeug auf dem Gewinderohrstück erreicht wird.

Um eine eindeutige Positionierung des Ansatzes für das Werkzeug auf dem Gewinderohrstück zu erreichen, ist vorgesehen, dass das Gewinde des Gewinderohrstücks im Bereich der Anordnung des Ansatzes für ein Werkzeug unterbrochen ist.

Durch die Unterbrechung des Gewindes im Bereich der Anordnung des Ansatzes für das Werkzeug wird erreicht, dass dieser Ansatz nur bis zu dieser Gewindeunterbrechung aufgeschraubt werden kann und somit maximal bis zu der gewünschten Sollposition.

Des Weiteren ist zur Komplettierung der Verschraubung vorgesehen, dass der Dichteinsatz durch einen Dichtkörper gebildet ist, der mit einem hülsenartigen Endbereich in das erste Ende des Gewinderohrstücks eingreift und mit einem kappenartigen Teil über dieses axial und radial vorragt, wobei letzteres von der auf das Gewinderohrstück aufgeschraubten Druckschraube in die Dichtlage verformbar ist.

Vorzugsweise ist dabei weiterhin vorgesehen, dass das Gewinderohrstück innenseitig durchgehend oder mindestens im Einsatzbereich des hülsenartigen Endbereiches axial verlaufende Nuten oder dergleichen Verformungen aufweist und der hülsenartige Endbereich des Dichtkörpers außenseitig analog entsprechende Rippen in axialer Ausrichtung aufweist.

Alternativ oder zusätzlich kann vorgesehen sein, dass das Gewinderohrstück an der Stirnfläche seines ersten Endes eine Aufrauhung oder Rändelung aufweist und der Dichteinsatz an seinem den hülsenartigen Endbereich radial überragenden, eine Stufe bildenden kappenartigen Teil an der Unterseite analog eine Aufrauhung oder eine Rändelung aufweist.

Auch kann bevorzugt vorgesehen sein, dass der Dichteinsatz nach Art einer Kappe ausgebildet ist, die von der Druckschraube übergriffen ist und die zur der Druckschraube abgewandten Seite abragende Stege oder Finger aufweist, die in axial gerichtete Schlitze eingreifen, die am Endbereich des ersten Endes des Gewinderohrstücks ausgenommen sind.

Zur Verbesserung der Abdichtung kann noch vorgesehen sein, dass auf dem Dichteinsatz ein Dichtring mit Dichtlippe angeordnet ist, der in Solllage von der Druckschraube eingeklemmt ist und dessen Dichtlippe in die Lochlaibung der Lochung der Druckschraube eingreift.

Zudem ist bevorzugt vorgesehen, dass das Gewinderohstück aus Metall, insbesondere Messing oder Edelstahl besteht.

Ausführungsbeispiele der Erfindung sind in der Zeichnung dargestellt und im Folgenden näher beschrieben.

Es zeigt:
- Figur 1: ein erstes Ausführungsbeispiel einer Verschraubung in Explosionsdarstellung;
- Figur 2: eine Variante in gleicher Ansicht;
- Figur 3: die Ausführungsform nach Figur 1 komplett montiert, teilweise geschnitten;
- Figur 4: eine Ausschnittsvergrößerung des Ausschnittes IV der Figur 3;
- Figur 5: die Verschraubung gemäß Figur 2 komplett montiert im Mittellängsschnitt gesehen.

In den Zeichnungen ist eine Verschraubung zur abgedichteten Durchführung von Leitungen, Rohren oder Stäben gezeigt. Sie besteht aus einem rohrförmigen Teil mit Außengewinde, dass mit Abstand von seinen Enden einen Ansatz 4 für ein Werkzeug aufweist, wobei das erste Ende des rohrförmigen Teiles mit einem Klemm- und/oder Dichteinsatz 3 kombiniert ist, der mittels einer auf das erste Ende aufgeschraubten gelochten Druckschraube 1 betätigbar ist. Das zweite Ende des rohrförmigen Teiles wird zur Montage durch eine Lochung einer Bauteilwandung oder dergleichen gesteckt und in Solllage durch eine gegengeschraubte Kontermutter oder ein anderes Befestigungsmittel fixiert. Erfindungsgemäß besteht das rohrförmige Teil aus einem Gewinderohrstück 6.

Der Ansatz 4 für ein Werkzeug ist durch einen Gewindering oder eine Mutter gebildet, der oder die auf das Gewinderohrstück 6 aufgeschraubt ist. Zur Lagesicherung des Ansatzes 4 für ein Werkzeug ist dieses nach dem Aufschrauben auf das Gewinderohrstück 6 in Solllage unlösbar darauf fixiert. Beispielsweise kann der Ansatz 4 auf dem Gewinderohrstück 6 unter Selbsthemmung gehalten sein oder auch geklebt, angepunktet oder verquetscht sein.

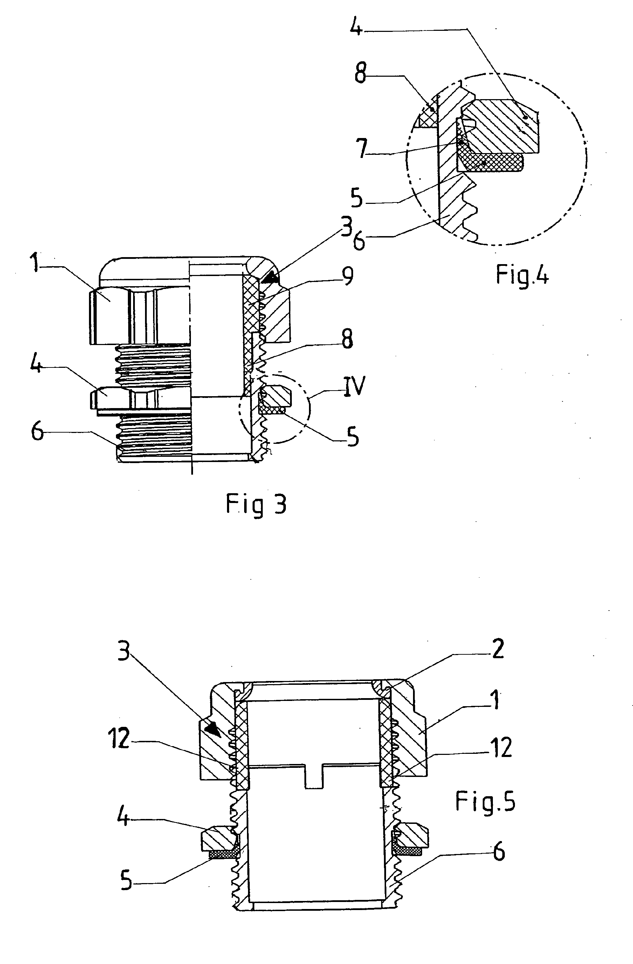

Im Ausführungsbeispiel ist der Ansatz 4 für ein Werkzeug auf das Gewinderohrstück 6 aufgeschraubt und ein Dichtring 5 ist auf seiner dem zweiten Ende des Gewinderohrstücks 6 zugewandten Seite angeordnet, der mit einer Dichtlippe 7 zwischen dem Gewinde des Gewinderohrstückes 6 und dem Gewinde des Ansatzes 4 eingeklemmt gehalten ist, wie dies insbesondere in Figur 3 und 4 ersichtlich ist.

Zusätzlich ist das Gewinde des Gewinderohrstückes 6 im Bereich der Anordnung des Ansatzes 4 für das Werkzeug unterbrochen, wobei diese Unterbrechung dazu dient, eine Einschraubbegrenzung für den Ansatz 4 zu bilden.

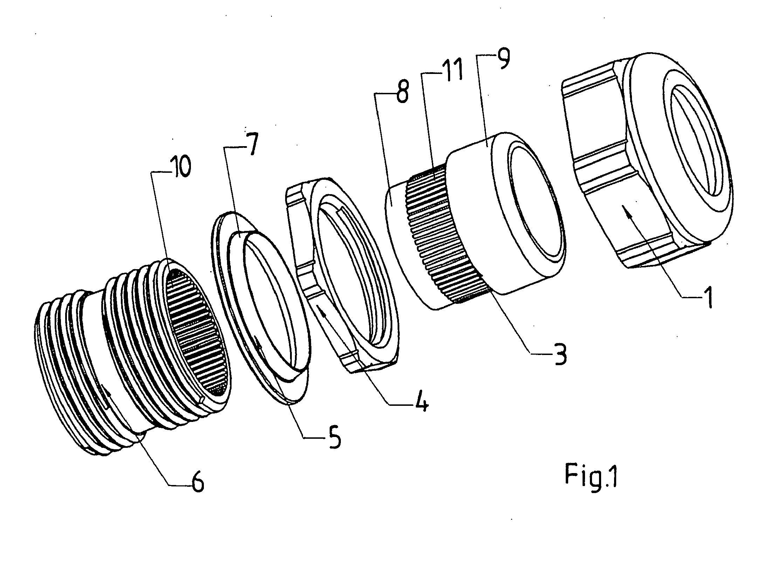

Der Dichteinsatz 3 ist bei der Ausführungsform gemäß Figur 1 durch einen Dichtkörper gebildet, der mit einem hülsenartigen Endbereich 8 in das erste Ende des Gewinderohrstücks 6 eingreift und mit einem kappenartigen Teil 9 über dieses axial vorragt, wobei letzteres von der auf das Gewinderohrstück 6 aufgeschraubten Druckschraube 1 in Dichtlage verformbar ist.

Ebenso ist bei dieser Ausführungsform das Gewinderohrstück 6 vorzugsweise innenseitig durchgehend mit axial verlaufenden Nuten 10 versehen, während der hülsenartige Endbereich 8 des Dichtkörpers 3 außenseitig analog entsprechende Rippen 11 in axialer Ausrichtung aufweist. Hierdurch wird eine Verdrehsicherung gebildet, die verhindert, dass der Dichtkörper 3 beim Aufschrauben der Druckschraube 1 mitdreht. Alternativ oder zusätzlich kann das Gewinderohrstück 6 an der Stirnfläche seines ersten Endes eine Aufrauhung oder eine Rändelung aufweisen und der Dichteinsatz 3 an seinem dem hülsenartigen Endbereich 8 radial überragenden, eine Stufe bildenden kappenartigen Teil 9 an der Unterseite der so gebildeten Stufe analog eine Aufrauhung oder Rändelung aufweisen, um auf diese Weise ebenfalls eine Verdrehsicherung zu bilden.

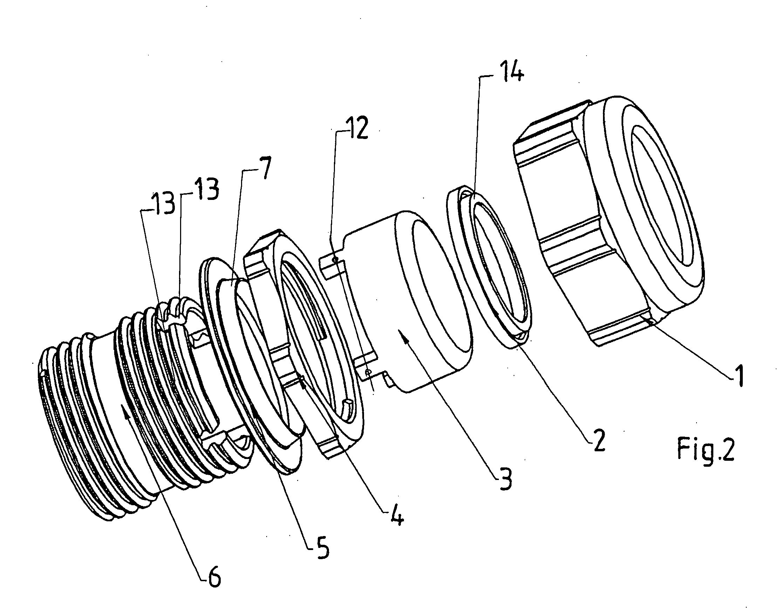

Bei der Ausführungsform nach Figur 2 ist der Dichteinsatz 3 nach Art einer Kappe ausgebildet, die von der Druckschraube 1 übergriffen ist und die zu der der Druckschraube 1 abgewandten Seite abragende Stege oder Finger 12 aufweist, die in axial gerichtete Schlitze 13 eingreifen, die am Endbereich des ersten Endes des Gewinderohrstückes 6 ausgenommen sind. Auch dies dient zur verdrehsicheren Anordnung des Dichteinsatzes 3.

Zusätzlich kann auf den Dichteinsatz 3 ein Dichtring 2 mit einer Dichtlippe 14 angeordnet sein, der in Solllage von der Druckschraube 1 eingeklemmt ist und in die Lochlaibung der Lochung der Druckschraube 1 eingreift, wie in Figur 5 verdeutlicht ist.

Vorzugsweise besteht das Gewinderohrstück 6 aus Metall, beispielsweise Messing oder Edelstahl. Zur Herstellung der Verschraubung kann aus einem entsprechenden Gewinderohr ein Teilstück abgetrennt werden, welches das Gewinderohrstück 6 bildet. Der Ansatz 4 für ein Werkzeug kann ebenfalls aus einem gezogenen Rohr abgeschnitten und für seinen Verwendungszweck entsprechend angepasst werden.

Die erfindungsgemäße Anordnung ermöglicht eine kostengünstige Fertigung einer entsprechenden Verschraubung. Bei der Fertigung der entsprechenden Verschraubung kann auch so vorgegangen werden, dass das Gewinderohrstück 6 aus einem glatten Rohrabschnitt gefertigt wird, der mit entsprechendem Außengewinde versehen wird und dann als Bestandteil der Verschraubung zur Verfügung steht.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Verschraubung zur abgedichteten Durchführung von Leitungen, Rohren oder Stäben, bestehend aus einem rohrförmigen Teil mit Außengewinde, das mit Abstand von seinen Enden einen Ansatz (4) für ein Werkzeug aufweist, wobei das erste Ende mit einem Klemm- und/oder Dichteinsatz (3) kombiniert ist, der mittels einer auf das erste Ende aufgeschraubten gelochten Druckschraube (1) betätigbar ist, und das zweite Ende durch eine Lochung einer Bauteilwandung steckbar und in Solllage durch eine Kontermutter oder ein anderes Befestigungsmittel fixierbar ist, **dadurch gekennzeichnet, dass** das rohrförmige Teil aus einem Gewinderohrstück (6) besteht.

2. Verschraubung nach Anspruch 1, **dadurch gekennzeichnet, dass** der Ansatz (4) für ein Werkzeug durch einen Gewindering oder eine Mutter gebildet ist, der oder die auf das Gewinderohrstück (6) aufgeschraubt ist.

3. Verschraubung nach Anspruch 1 oder 2, **dadurch gekennzeichnet, dass** der Ansatz (4) für ein Werkzeug auf das Gewinderohrstück (6) aufgebracht und in Solllage, vorzugsweise unlösbar, darauf fixiert ist.

4. Verschraubung nach einem der Ansprüche 1 bis 3, **dadurch gekennzeichnet, dass** der Ansatz (4) für ein Werkzeug auf dem Gewinderohrstück (6) unter Selbsthemmung gehalten ist, oder geklebt, angepunktet oder verquetscht ist.

5. Verschraubung nach einem der Ansprüche 1 bis 4, **dadurch gekennzeichnet, dass** der Ansatz (4) für ein Werkzeug auf das Gewinderohrstück (6) aufgeschraubt ist und ein Dichtring (5) auf seiner dem zweiten Ende des Gewinderohrstücks (6) zugewandten Seite angeordnet ist, der mit einer Dichtlippe (7) zwischen dem Gewinde des Gewinderohrstücks(6) und dem Gewinde des Ansatzes (4) eingeklemmt gehalten ist.

6. Verschraubung nach einem der Ansprüche 1 bis 5, **dadurch gekennzeichnet, dass** das Gewinde des Gewinderohrstücks (6) im Bereich der Anordnung des Ansatzes (4) für ein Werkzeug unterbrochen ist.

7. Verschraubung nach einem der Ansprüche 1 bis 6, **dadurch gekennzeichnet, dass** der Dichteinsatz (3) durch einen Dichtkörper gebildet ist, der mit einem hülsenartigen Endbereich (8) in das erste Ende des Gewinderohrstücks (6) eingreift und mit einem kappenartigen Teil (9) über dieses axial und radial vorragt, wobei letzteres von der auf das Gewinderohrstück (6) aufgeschraubten Druckschraube (1) in die Dichtlage verformbar ist.

8. Verschraubung nach Anspruch 7, **dadurch gekennzeichnet, dass** das Gewinderohrstück (6) innenseitig durchgehend oder mindestens im Einsatzbereich des hülsenartigen Endbereiches (8) axial verlaufende Nuten oder dergleichen Verformungen (10) aufweist und der hülsenartige Endbereich (8) des Dichtkörpers (3) außenseitig analog entsprechende Rippen (11) in axialer Ausrichtung aufweist.

9. Verschraubung nach einem der Ansprüche 1 bis 8, **dadurch gekennzeichnet, dass** das Gewinderohrstück (6) an der Stirnfläche seines ersten Endes eine Aufrauhung oder Rändelung aufweist und der Dichteinsatz (3) an seinem den hülsenartigen Endbereich (8) radial überragenden, eine Stufe bildenden kappenartigen Teil (9) an der Unterseite analog eine Aufrauhung oder eine Rändelung aufweist.

10. Verschraubung nach einem der Ansprüche 1 bis 6, **dadurch gekennzeichnet, dass** der Dichteinsatz (3) nach Art einer Kappe ausgebildet ist, die von der Druckschraube (1) übergriffen ist und die zur der Druckschraube (1) abgewandten Seite abragende Stege oder Finger (12) aufweist, die in axial gerichtete Schlitze (13) eingreifen, die am Endbereich des ersten Endes des Gewinderohrstücks (6) ausgenommen sind.

11. Verschraubung nach einem der Ansprüche 1 bis 10, **dadurch gekennzeichnet, dass** auf dem Dichteinsatz (3) ein Dichtring (2) mit Dichtlippe (14) angeordnet ist, der in Solllage von der Druckschraube (1) eingeklemmt ist und dessen Dichtlippe (14) in die Lochlaibung der Lochung der Druckschraube (1) eingreift.

12. Verschraubung nach einem der Ansprüche 1 bis 11, **dadurch gekennzeichnet, dass** das Gewinderohstück (6) aus Metall, insbesondere Messing oder Edelstahl besteht.
